# EUROPÄISCHE PATENTANMELDUNG

(11) **EP 0 813 029 A2**
(43) Veröffentlichungstag der Anmeldung: **17.12.1997**
(21) Anmeldenummer: 97250177.9
(22) Anmeldetag: 07.06.1997
(51) Int. Cl.: F23D 14/78, F23D 14/82, F23D 14/58, F24H 8/00

(54) **Verfahren zum Verbrennen eines gasförmigen Brennstoff-Luft-Gemisches**

(30) Priorität: 10.06.1996 AT 1003/96; 02.06.1997 AT 932/97
(71) Anmelder: Joh. Vaillant GmbH u. Co., 42810 Remscheid (DE)
(72) Erfinder: Herzog, Elfriede, Dr., 13347 Berlin (DE); Neumann, Nils, 12623 Berlin (DE)
(74) Vertreter: Heim, Johann-Ludwig, Dipl.-Ing.

(57) **Zusammenfassung**

Heizeinrichtung mit einem in einer an eine Abgasleitung angeschlossenen, im wesentlichen dichten Brennkammer (1), angeordneten Brenneranordnung (6), wobei in der Brennkammer (1) ein Wärmetauscher (13) angeordnet ist und eine Gemischleitung (2) die Brennkammer (1) dicht durchsetzt. Um den NOₓ-Ausstoß zu reduzieren, ist vorgesehen, daß die Ausströmöffnung (8) des Gemischrohres (2) von einer gas-, jedoch wasserundurchlässigen Membrane (9) überdeckt ist und oberhalb der Membrane (9) ein sich im wesentlichen über den gesamten Querschnitt der Brennkammer (1) erstreckendes Wasserbett (11) vorgesehen ist, wobei oberhalb des Wasserspiegels des Wasserbettes (11) eine Zündeinrichtung angeordnet ist und eine Regeleinrichtung zur Konstanthaltung des Wasserspiegels vorgesehen ist.

## Beschreibung

Die Erfindung bezieht sich auf ein Verfahren zum Verbrennen eines gasförmigen Brennstoff-Luft-Gemisches gemäß dem Oberbegriff des Anspruches 1.

Bei bekannten derartigen Verfahren wird das Brennstoff-Luft-Gemisch in Rohren oder Schläuchen zu einer aus Metall oder Keramik hergestellten Brennfläche, die einen Hohlraum begrenzt und mit Austrittsöffnungen versehen ist, geführt. Dabei ergibt sich jedoch der Nachteil, daß sich durch die Wärmestrahlung der Flammen an der Oberseite der Brennfläche diese entsprechend erwärmt, wodurch es zu einer Erhöhung des Schadstoffausstoßes während der Verbrennung und auch zu einem Zurückschlagen der Flammen in das Innere des von Brennfläche begrenzten Hohlraumes kommen kann.

Ziel der Erfindung ist es, diese Nachteile zu vermeiden und ein Verfahren der eingangs erwähnten Art vorzuschlagen, bei dem eine Aufheizung des zuströmenden Brennstoff-Luft-Gemisches durch die Flammen weitgehend vermieden ist.

Erfindungsgemäß wird dies bei einem Verfahren der eingangs erwähnten Art durch die kennzeichnenden Merkmale des Anspruches 1 erreicht.

Durch die vorgeschlagenen Verfahrensschritte ist sichergestellt, daß das zuströmende Brennstoff-Luft-Gemisch durch die zu durchströmende Flüssigkeit entsprechend gekühlt wird. Außerdem ergibt sich eine sehr gleichmäßige Verteilung der Flammen über die gesamte Oberfläche der Flüssigkeit. Außerdem wird auch Wärme von den Flammen in die Flüssigkeit abgeleitet, wodurch die Flammentemperatur und damit auch der NOₓ-Ausstoß sinkt.

Durch die Merkmale des Anspruches 2 ergibt sich der Vorteil, daß Wasser beziehungsweise Wasserdampf eine sehr hohe spezifische Wärmekapazität aufweist und daher sehr viel Wärme aufnehmen kann und das Gemisch und damit die Flamme entsprechend kühlt.

Durch die Merkmale des Anspruches 3 ergibt sich der Vorteil, daß ein Zurückschlagen der Flammen ausgeschlossen ist, da das Gemisch in Form von fein verteilten Bläschen die Flüssigkeit durchsetzt und daher die einzelnen Flammen beim Aufplatzen eines Gemischbläschens an der Oberfläche der Flüssigkeit kurz brennen und wieder verlöschen.

Weiter bezieht sich die Erfindung auf eine Heizeinrichtung gemäß dem Oberbegriff des Anspruches 4.

Bekannte derartige Heizeinrichtungen weisen Brenner auf, die aus Blech hergestellt und mit verteilt angeordneten Ausströmöffnungen versehen sind. Dabei ist gegebenenfalls eine Kühlung für den Brenner vorgesehen, etwa in Form von an der Oberseite des Brenners verlegte Kühlschlangen.

Trotz dieser Maßnahmen ist es unvermeidlich, daß sich das im Inneren des Brenners befindliche Gas-Luft-Gemisch durch die Wärme der Flammen vorwärmt, wodurch sich die Arbeitsbedingungen für den Brenner verändern. Außerdem führen die bei solchen Brennern auftretenden relativ hohen Flammentemperaturen zu einem entsprechend hohen NOₓ-Ausstoß.

Ein weiterer Nachteil der bekannten Lösungen liegt auch in dem relativ hohen Herstellungsaufwand.

Ein weiteres Ziel der Erfindung ist es daher, diese Nachteile zu vermeiden und eine Heizeinrichtung der eingangs erwähnten Art vorzuschlagen, die sich einfach herstellen läßt und bei der der NOx-Ausstoß weitgehend reduziert ist.

Erfindungsgemäß wird dies bei einer Heizeinrichtung gemäß dem Oberbegriff des Anspruches 4 durch die kennzeichnenden Merkmale des Anspruches 4 erreicht.

Durch die vorgeschlagenen Maßnahmen wird erreicht, daß das vorgemischte und homogenisierte Gas-Luft-Gemisch fein verteilt durch das Wasserbett aufsteigt, wodurch das erfindungsgemäße Verfahren auf einfache Weise durchgeführt werden kann. Dabei strömt ein Wasserdampf gesättigtes Gas aus dem Wasserbett an der Oberfläche des Wassers in den Gasraum des Brenners und verbrennt, wobei die Zündung durch die Zündeinrichtung, zum Beispiel einen Zündbrenner oder einen Glühdraht, sichergestellt wird.

Dabei verbrennt das Gas-Luft-Gemisch in unmittelbarer Nähe der Oberfläche des Wassers, wobei sich keine zusammenhängende Flamme ausbildet, sondern eine stetig umherwandernde Flammenfront, die die aufsteigenden Gasblasen umsetzt.

Der besondere Vorteil einer erfindungsgemäßen Heizeinrichtung liegt darin, daß die das Gas beim Durchströmen des Wasserbettes und Wasserdampf gesättigt wird, das während des Verbrennungsprozesses Energie aufnimmt und so die Flammentemperatur durch das hohe Wärmeaufnahmevermögen des Wasserdampfes deutlich herabsetzt.

Durch das Wasserbad wird gewährleistet, daß die Gasströme nicht vorgeheizt werden. Damit ist eine wichtige Voraussetzung für eine deutliche NOₓ-Reduzierung sichergestellt, wozu auch die Wärmeabfuhr aus dem Flammenbereich durch die Energieaufnahme des Verdampfens aufgrund Wasserdampfes wesentlich beiträgt. Weiter wird durch die Reaktion in unmittelbarer Nähe der Wasseroberfläche zusätzlich Wärme an das Wasser abgegeben.

Dies führt zu einer weiteren Verdampfung von Wasser, wobei gleichzeitig Wärme an das Wasserbett abgegeben wird.

Durch das Begasen des Wasserbettes wird das Wasser in ständiger Bewegung gehalten, so daß sich eine fast ideale Wärmeverteilung ergibt. Durch diese Bewegung des Wassers wird Wärme aus der Reaktionszone in das Wasser geleitet und infolge seiner Eigenbewegung auch an die Wand der Brennkammer abgegeben.

Das heiße Abgas strömt infolge des thermischen Auftriebes dem Wärmetauscher zu und gibt dort seine Wärme ab. Das mit Wasserdampf beladene Abgas strömt entlang den Wärmetauscherflächen des Wärmetauschers und kondensiert dort, wodurch die Kondensationswärme an den Wärmetauscher abgegeben wird. Dabei kondensiert sowohl der durch die Verbrennung des Gas-Luft-Gemisches entstehende Wasserdampf wie das durch die Flammen verdampfte Wasser. Aus diesem Grund ist das anfallende Kondensat auch wesentlich weniger aggressiv als das bei üblichen Brennern anfallende Kondensat, bei denen lediglich das durch die Verbrennung eines Gas-Luft-Gemisches anfallende Wasser kondensiert.

Durch die vorgeschlagenen Maßnahmen wird durch das Wasserbett auch eine sehr sichere Flammensperre erreicht.

Eine erfindungsgemäße Heizeinrichtung weist nur wenige Teile auf, die sich leicht und einfach herstellen lassen. Dabei ist eine erfindungsgemäße Heizeinrichtung für alle Gasarten geeignet. Dabei ist auch eine sichere Umsetzung von Wasserstoff-Luftmischungen möglich.

Der Brenner einer solchen erfindungsgemäßen Heizeinrichtung kann sowohl als vollvormischender Brenner ausgebildet sein oder auch als atmosphärischer Brenner. In letzterem Fall mündet ein Injektor in den unter der Membrane befindlichen Raum. Die Auslegung der Düsen muß dabei so erfolgen, daß der Impuls des Treibstrahles hinreichend groß ist, um die Widerstände des Wasserbettes, des Flammenrückdruckes und des Strömungswiderstandes zur Gasverteilung zu überwinden.

Das Gas wird dabei in kurzen, sich rasch erweiternden Mischkörpern mit der Luft vermischt und strömt in einen Gassammelraum, in den alle Injektoren münden. Von dort führen mehrere Einsteckrohre in den unter der Membrane des Brenners liegenden Raum. Damit ergibt sich ein im wesentlichen gleicher Betrieb wie bei einem vollvormischenden Brenner.

Durch die Merkmale des Anspruches 5 ergibt sich der Vorteil einer sehr einfachen Regelung des Wasserstandes des Brenners, wobei ständig jene Menge an Wasser in den Brenner nachfließen kann, die verdampft wird.

Durch die Merkmale des Anspruches 6 ergibt sich der Vorteil, daß die Kondensatrinnen den Einlauf der Brenngase zwischen je zwei Platten des Plattenwärmetauschers erleichtern und den Druckverlust in diesem Bereich vermindern. Gleichzeitig wird eine sichere Führung des Kondensats sichergestellt.

Durch die Merkmale des Anspruches 7 ergibt sich der Vorteil einer sehr weitgehenden Auskopplung der in der Brennkammer erzeugten Wärme, wobei die Kühleinrichtung durch Rohrschlangen oder auch durch einen Wassermantel gebildet sein kann.

Durch die Merkmale des Anspruches 8 ergibt sich der Vorteil, daß sich eine nahezu konstante ortsfeste Flammenfront direkt oberhalb der Brennerplatte ausbildet, wie dies bei konventionellen Brennern üblich ist. Eine Gefahr des Abhebens wird dadurch umgangen, daß die Aufstiegsgeschwindigkeit der Gasblasen, und damit die Aufsteigegeschwindigkeit des Gas-Luft-Gemisches nunmehr kleiner ist, als die Flammengeschwindigkeit.

Bei einer Heizeinrichtung zur Durchführung des erfindungsgemäßen Verfahrens gemäß dem Oberbegriff des Anspruches 2 ist es vorteilhaft, die kennzeichnenden Merkmale des Anspruches 9 vorzusehen.

Durch die Merkmale des Anspruches 10 ergibt sich der Vorteil, daß eine solche Brenneranordnung besonders einfach herstellbar ist. Dabei ist es besonders vorteilhaft, ein weiches Kupferrohr zu verwenden.

Eine besonders gleichmäßige Verteilung des Gas-Luftgemisches ergibt sich durch die Merkmale des Anspruches 11 oder 12. Durch diese Merkmale können die Ausströmöffnungen im wesentlichen in gleichbleibenden Abständen angeordnet werden, da die Versorgung mit Gas von beiden Enden des Gasverteilrohres erfolgt.

Die Erfindung wird nun anhand der Zeichnung näher erläutert. Dabei zeigen:
Fig. 1 schematisch eine erste erfindungsgemäße Heizeinrichtung,
Fig. 2 schematisch eine zweite erfindungsgemäße Heizeinrichtung,
Fig. 3 eine Draufsicht auf eine Verteilungsanordnung,
Fig. 4 einen Schnitt durch die Verteilungsanordnung nach der Fig. 3,
Fig. 5 eine Draufsicht auf eine weitere Ausführungsform einer Verteilungsanordnung

Gleiche Bezugszeichen bedeuten in allen Figuren gleiche Einzelheiten.

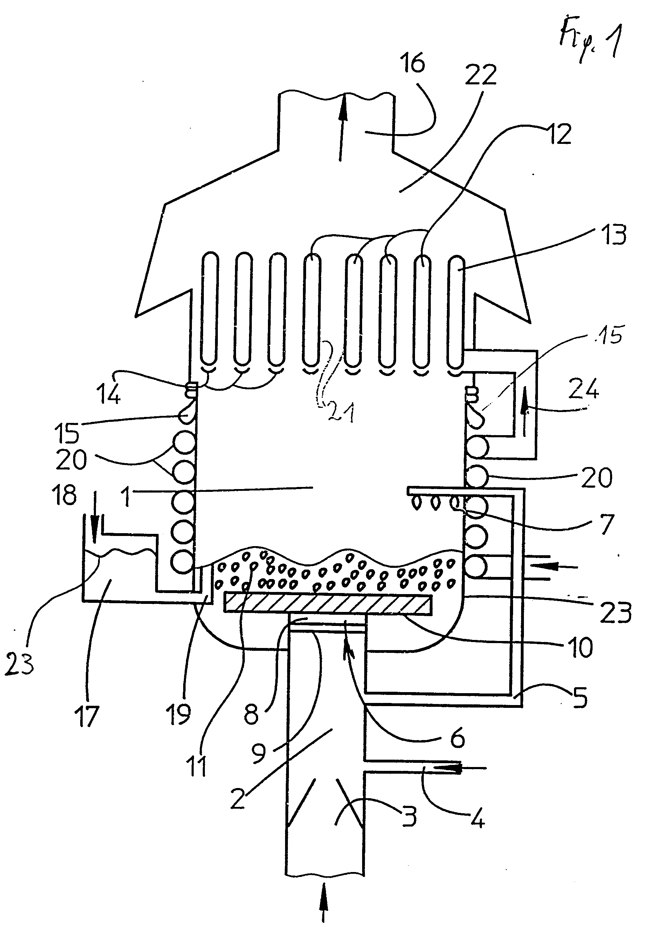

Bei einer erfindungsgemäßen Heizeinrichtung nach der Fig. 1 ist eine im wesentlichen zylindrische Brennkammer 1 vorgesehen. In diese ragt von unten her ein Gemischrohr 2 hinein, wobei das Gemischrohr 2 im wesentlichen zentral angeordnet ist.

In das Gemischrohr 2, in dem ein Gebläse 3 angeordnet ist, mündet eine Gasleitung 4. Dabei zweigt vom Gemischrohr 2 eine Zündgasleitung 5 ab, die oberhalb einer Brenneranordnung 6 in die Brennkammer 1 hingeführt ist und Zündflammen 7 speist.

Die Brenneranordnung 6 ist durch eine die Ausströmöffnung 8 des Gemischrohres 2 abschließende gasdurchlässige, jedoch wasserundurchlässige Membrane 9, eine über dieser liegende poröse Fritte 10 beziehungsweise ein poröser Keramikkörper und ein Wasserbett 11 gebildet.

Oberhalb der Brenneranordnung 6 ist ein Plattenwärmetauscher 12 angeordnet, wobei unterhalb der Unterkanten 21 der Platten 13 Kondensatrinnen 14 angeordnet sind, die zu einer Kondensatsammelrinne 15 führen, die in die Innenwand der Brennkammer 1 eingearbeitet ist und mit einem nach außen führenden (nicht dargestellten) Auslauf versehen ist.

Oberhalb des Plattenwärmetauschers 12 ist eine Abgassammelhaube 22 angeordnet, die mit einem Abgasstutzen 16 versehen ist, an den ein Abgasrohr anschließbar ist.

Weiter ist ein Wasservorratsbehälter 17 vorgesehen, dessen Wasserspiegel 23 geregelt ist, um diesen auf gleicher Höhe halten zu können. Dabei sind ein Wasserzulauf 18, der zum Beispiel über ein schwimmergesteuertes Ventil steuerbar ist, und ein in das Wasserbett 11 hineinragendes abgewinkeltes Rohr 19 vorgesehen, die an den Wasservorratsbehälter 17 angeschlossen sind. Dadurch ergibt sich eine Verbindung zwischen dem Wasservorratsbehälter 17 und dem Wasserbett 11 nach Art kommunizierender Gefäße, wodurch die Höhe des Wasserspiegels im Wasservorratsbehälter 17 die Höhe des Wasserspiegels des Wasserbetts 11 bestimmt.

Beim Betrieb der Brenneranordnung 6 treibt das Gebläse 3 Luft durch das Gemischrohr 2, wobei Gas in dieses einströmt und sich mit der Luft vermischt. Das Gas-Luft-Gemisch tritt über die Membrane 9 und die Fritte 10 in das Wasserbett 11 ein, wobei sich das Gas-Luft-Gemisch sehr gleichmäßig über das gesamte Wasserbett 11 verteilt und in Form von kleinen Gasblasen im Wasserbett 11 aufsteigt.

An der Oberfläche des Wasserbettes wird das Gas-Luft-Gemisch durch die Zündflammen 7, einen mit einem Zünder versehenen Zündbrenner, die über die vom Gemischrohr 2 abzweigende Zündgasleitung 5 versorgt werden, gezündet.

Durch das Verbrennen des Gas-Luft-Gemisches an der Oberfläche des Wasserbettes 11 wird Wärme in das Wasserbett eingeleitet, wodurch das an und in den Gasblasen anhaftende Wasser und auch Wasser vom Wasserbett 11 verdampft wird. Dadurch wird die Flammentemperatur relativ weit abgesenkt, wodurch auch die NOₓ-Emissionen entsprechend vermindert werden.

Die Brenngase durchströmen den Plattenwärmetauscher 12 und geben dabei ihre Wärme ab. Dabei kondensiert auch der Wasserdampf, der einerseits durch das Verdampfen von Wasser aus dem Wasserbett 11 in den Brenngasen enthalten ist und andererseits auch der durch die Verbrennung des Gases entstehende Wasserdampf. Dadurch wird die Verdampfungswärme zurückgewonnen.

An der Außenseite der Brennkammer 1 ist eine Kühleinrichtung 20 vorgesehen, die durch eine Rohrschlange gebildet ist und zur Abfuhr der Wärme der durch Strahlung aufgeheizten Brennkammerwand 23 dient. Diese Rohrschlange ist stromauf des Plattenwärmetauschers 12 geschaltet und mit diesem über ein Rohr 24 verbunden.

Grundsätzlich ist auch möglich, zur Durchführung des erfindungsgemäßen Verfahrens lediglich einen Brenner vorzusehen. Ein solcher weist einen im wesentlichen gleichen Aufbau auf wie die dargestellte Heizeinrichtung, nur daß ein Plattenwärmetauscher fehlt.

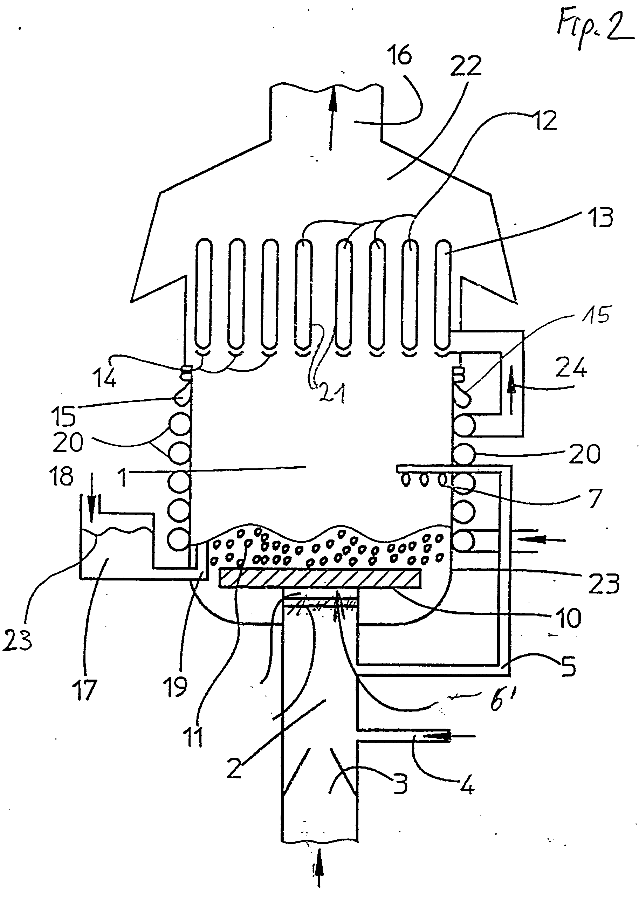

Bei der Ausführungsform nach der Fig. 2 weist die Brenneranordnung 6' eine Verteileinrichtung 10 auf, die mit dem Gemischrohr 2 direkt verbunden ist und von dem Wasserbett 11 überdeckt ist. Dabei ist auf die gasdurchlässige und wasserundurchlässige Membrane 9 verzichtet.

Beim Betrieb der Brenneranordnung 6', die im untersten Bereich der Brennkammer 1 angeordnet ist, treibt das Gebläse 3 Luft durch das Gemischrohr 2, wobei Gas in dieses einströmt und sich mit der Luft vermischt. Das Gas-Luft-Gemisch tritt über Ausströmöffnungen der Verteileinrichtung 10 aus und steigt gleichmäßig verteilt im Wasserbett 11 auf und wird an der Oberfläche des Wasserbettes 11 durch die Zündflammen 7 gezündet.

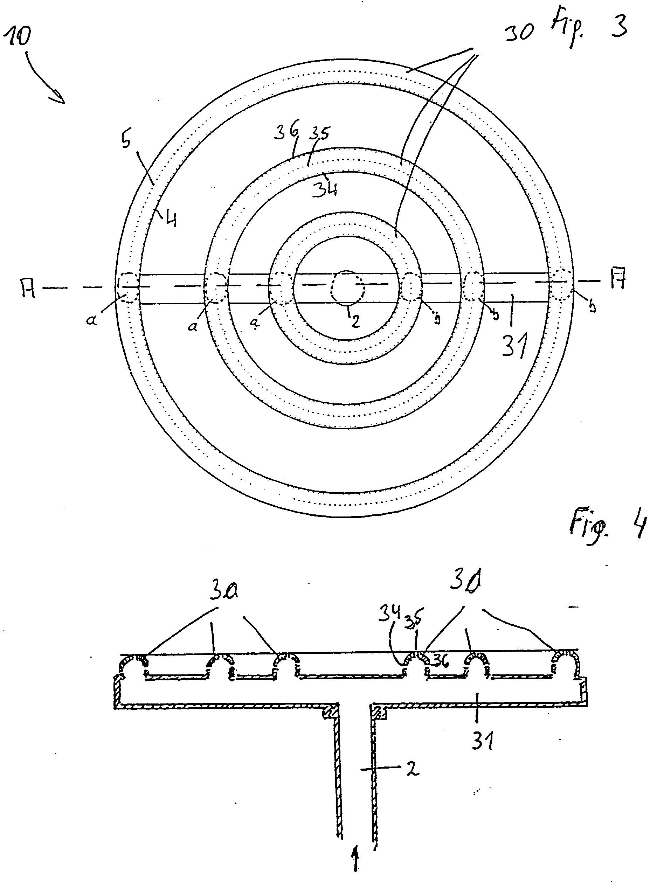

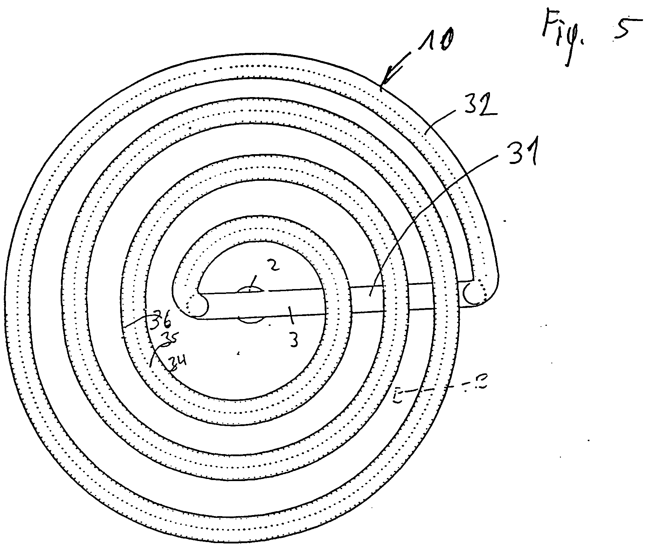

Die Fig. 3 und 4 zeigt eine erste Ausführungsform einer Verteileinrichtung 10. Dabei sind mehrere konzentrisch angeordnete kreisförmig gebogene Gasverteilrohre 30 vorgesehen, die, wie insbesonders aus der Fig. 2 zu ersehen ist, mit Ausströmöffnungen 34, 35, 36 versehen sind.

Dabei sind die Gasverteilrohre 30 mit einem im wesentlichen diametral verlaufenden Gaszuführrohr 31 verbunden. Die Gasverteilrohre 30 sind an je zwei Stellen mit dem Gaszuführrohr 31 verbunden, wobei die Gasverteilrohre 30 auf das Gaszuführrohr 31 aufgesetzt sind.

Bei der Ausführungsform einer Verteileinrichtung 10 nach der Fig. 5 ist ein Gasverteilrohr 32 vorgesehen, das im wesentlichen schneckenförmig gebogen ist und ebenfalls mit Ausströmöffnungen 34, 35, 36 versehen ist. Dabei ist das Gasverteilrohr 32 an seinen beiden Enden mit einem Gaszuführrohr 31 verbunden, das ihrerseits mit dem Gemischrohr 2 verbunden ist.

Bei beiden Ausführungsformen ist sichergestellt, daß das Gasgemisch über das Gemischrohr 2 und das Gaszuführrohr 31 dem Gasverteilrohr(en) 30, 32 beziehungsweise deren Ausströmöffnungen 34, 35, 36 fein verteilt in das Wasserbad 11 ausströmt, wobei die entstehenden Gemischbläschen im Wasserbad 11 hochsteigen und an dessen Oberfläche in Flammen verbrennen.

## Patentansprüche

1. Verfahren zum Verbrennen eines gasförmigen Brennstoff-Luft-Gemisches, das zu einer Brennfläche geführt wird, dadurch gekennzeichnet, daß das Brennstoff-Luft-Gemisch durch eine Flüssigkeit hindurchgeführt und an der Oberfläche derselben verbrannt wird.

2. Verfahren nach Anspruch 1, dadurch gekennzeichnet, daß das Brennstoff-Luft-Gemisch durch Wasser hindurchgeführt wird.

3. Verfahren nach Anspruch 1 oder 2, dadurch gekennzeichnet, daß das Gemisch unmittelbar vor der Verbrennungszone eine Flüssigkeitszone durchsetzt.

4. Heizeinrichtung zum Verbrennen eines gasförmigen Brennstoff-Luft-Gemisches mit einem in einer an eine Abgasleitung angeschlossenen, im wesentlichen dichten Brennkammer (1), angeordneten Brenneranordnung (6), wobei in der Brennkammer (1) ein Wärmetauscher (13) angeordnet ist und eine Gemischleitung (2) die Brennkammer (1) dicht durchsetzt, **dadurch gekennzeichnet**, daß die Ausströmöffnung (8) des Gemischrohres (2) von einer gas-, jedoch wasserundurchlässigen Membrane (9) überdeckt ist und oberhalb der Membrane (9) ein sich im wesentlichen über den gesamten Querschnitt der Brennkammer (1) erstreckendes Wasserbett (11) vorgesehen ist, wobei oberhalb des Wasserspiegels des Wasserbettes (11) eine Zündeinrichtung angeordnet ist und eine Regeleinrichtung zur Konstanthaltung des Wasserspiegels vorgesehen ist.

5. Heizeinrichtung nach Anspruch 4, **dadurch gekennzeichnet**, daß ein Wasservorratsbehälter (17) mit geregeltem Wasserspiegel mit dem über der Membrane (9) liegenden Bereich der Brennkammer (1) beziehungsweise dem Wasserbett (11) verbunden ist, so daß sich kommunizierende Gefäße ergeben.

6. Heizeinrichtung nach Anspruch 4 oder 5, **dadurch gekennzeichnet**, daß der Wärmetauscher als Plattenwärmetauscher (12) ausgebildet ist, wobei unter den Unterkanten der Platten (13) im Querschnitt vorzugsweise halbrunde Kondensatrinnen (14) angeordnet sind, die zu einer im Inneren der Brennkammer (1) angeordneten Kondensatsammelrinne (15) führen, die nach außen führt.

7. Heizeinrichtung nach einem der Ansprüche 4 bis 6, **dadurch gekennzeichnet**, daß die Brennkammer (1) an ihrer Außenseite mit einer Kühleinrichtung (20) versehen ist.

8. Heizeinrichtung nach einem der Ansprüche 4 bis 7, **dadurch gekennzeichnet**, daß direkt unterhalb des Wasserspiegels eine perforierte Platte angeordnet ist.

9. Heizeinrichtung zum Verbrennen eines gasförmigen Brennstoff-Luft-Gemisches mit einer in einer an eine Abgasleitung (16) angeschlossenen, im wesentlichen dichten Brennkammer (1), angeordneten Brenneranordnung (6), wobei in der Brennkammer (1) ein Wärmetauscher (12) angeordnet ist und ein Gemischrohr (2) die Brennkammer (1) dicht durchsetzt, **dadurch gekennzeichnet**, daß die Brenneranordnung (6) im untersten Bereich der Brennkammer (1) angeordnet ist und ein mit Wasser überdecktes mit einer Vielzahl von Ausströmöffnungen (34, 35, 36) versehenes Gasverteilrohr (30, 32) aufweist, das an das Gaszuführrohr (31) angeschlossen ist, wobei eine Zündeinrichtung (7) oberhalb des Wasserspiegels angeordnet ist.

10. Heizeinrichtung nach Anspruch 9, **dadurch gekennzeichnet**, daß das Gasverteilrohr (30, 32) im wesentlichen durch ein in einer Ebene gebogenes Rohr gebildet ist.

11. Heizeinrichtung nach Anspruch 9 oder 10, **dadurch gekennzeichnet**, daß das, vorzugsweise schneckenförmig gebogene, Gasverteilrohr (32) zumindest an seinen beiden Enden mit einem Gaszuführrohr (31) verbunden ist.

12. Heizeinrichtung nach Anspruch 10 oder 11, **dadurch gekennzeichnet**, daß mehrere im wesentlichen konzentrisch angeordnete geschlossene Gasverteilrohre (30) vorgesehen sind, die mit einem im wesentlichen diametral verlaufenden Gaszuführrohr (31) an jeweils zwei Stellen verbunden sind.
